# FASCICULE DE BREVET EUROPEEN

(11) **EP 3 994 437 B1**
(45) Date de publication et mention de la délivrance du brevet: **24.05.2023**
(21) Numéro de dépôt: 20746248.2
(22) Date de dépôt: 29.06.2020
(51) Int. Cl.: G01L 9/02, G01L 9/04

(54) **CAPTEUR DE PRESSION DOUBLE**
DOPPELDRUCKSENSOR
DUAL PRESSURE SENSOR

(30) Priorité: 03.07.2019 FR 1907409
(43) Date de publication de la demande: 11.05.2022
(73) Titulaire: ArianeGroup SAS, 78130 Les Mureaux (FR)
(72) Inventeur: GOUBERT, François, 33185 LE HAILLAN (FR); DARRIET, Christine, 33185 LE HAILLAN (FR); DECHAMBENOIT, Bertrand, 33185 LE HAILLAN (FR); CESARD, Pascal, 33185 LE HAILLAN (FR); LABENNE, Sébastien, 33185 LE HAILLAN (FR)
(74) Mandataire: Cabinet Beau de Loménie
(86) Numéro de dépôt international: PCT/FR2020/051132
(87) Numéro de publication internationale: WO 2021/001620

(56) Documents cités:
- WO-A1-2006/097613
- FR-A1- 2 535 458
- US-B1- 6 289 738
- US-B2- 8 881 597

## Description

### Arrière-plan de l'invention

La présente invention se rapporte au domaine général des capteurs de pression, et plus particulièrement des capteurs de pression comprenant des jauges extensométriques.

Les capteurs de pression comprennent généralement un pont de Wheatstone qui est installé sur un corps de déformation et qui permet de mesurer les déformations dudit corps de déformation.

Le corps de déformation est soumis à la pression d'une ligne de fluide et la pression dudit fluide est déterminée par mesure de la déformation du corps de déformation.

De tels capteurs de pression permettent une mesure de pression précise, et sont ainsi typiquement utilisées dans le domaine aérospatial.

Afin d'augmenter la fiabilité de la mesure de la pression, et notamment dans le domaine spatiale ou aéronautique, une redondance est créée en utilisant deux capteurs pression mesurant la pression d'un même réservoir de fluide ou d'une même ligne de fluide.

Toutefois, le fait d'utiliser deux capteurs d'une part augmente le poids et l'encombrement du système, et d'autre part diminue la précision de la mesure, car comme les deux capteurs sont situés à deux endroits différents, il est nécessaire de faire des hypothèses sur le comportement du fluide dans le réservoir ou dans la ligne. Le document US 8 881 597 B2 divulgue un capteur de pression avec deux ponts de Wheatstone.

### Objet et résumé de l'invention

La présente invention a donc pour but principal de pallier de tels inconvénients en proposant un capteur de pression permettant d'obtenir une double mesure de pression selon la revendication 1.

L'invention permet notamment d'utiliser un seul capteur à la plus d'une pluralité de capteurs afin d'assurer une redondance dans la mesure de la pression.

L'invention concerne un capteur de pression comprenant un corps de déformation, caractérisé en ce qu'au moins un premier pont de Wheatstone et un deuxième pont de Wheatstone sont formés sur ledit corps de déformation, le premier pont de Wheatstone et le deuxième pont de Wheatstone comprenant chacun d'une part une première paire de résistances situées à une première distance d'un centre du corps de déformation, et d'autre part une deuxième paire de résistances situées à une deuxième distance dudit centre dudit corps de déformation, la deuxième distance étant supérieure à la première distance.

Selon une caractéristique possible, d'une part les premières paires de résistances du premier pont de Wheatstone et du deuxième pont de Wheatstone sont situées dans une zone du corps de déformation soumise à une traction lorsque ledit corps de déformation est déformé, et d'autre part les deuxièmes paires de résistances du premier pont de Wheatstone et du deuxième pont de Wheatstone sont situées dans une zone du corps de déformation soumise à une compression lorsque ledit corps de déformation est déformé.

Selon l'invention, le premier pont de Wheatstone comprend des résistances dans un premier matériau et le deuxième pont de Wheatstone comprend des résistances dans un deuxième matériau, le premier matériau et le deuxième matériau étant différents.

Selon une caractéristique possible, les résistances du premier pont de Wheatstone et les résistances du deuxième pont de Wheatstone possèdent une valeur de résistance identique.

Selon une caractéristique possible, les résistances du premier pont de Wheatstone et les résistances du deuxième pont de Wheatstone possèdent une valeur de résistance différente.

Selon une caractéristique possible, le capteur comprend un circuit de compensation qui est configuré pour d'une part compenser une variation en température des résistances du premier pont de Wheatstone, et d'autre part compenser une variation en température des résistances du deuxième pont de Wheatstone.

Selon un deuxième aspect, l'invention concerne un moteur fusée comprenant un capteur de pression selon l'une quelconque des caractéristiques précédentes.

Selon une caractéristique possible, le moteur fusée est un moteur fusée à propulsion liquide dans lequel le capteur est situé dans une paroi d'un circuit de fluide.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- La figure 1 représente schématiquement un capteur de pression.
- La figure 2 représente schématiquement une vue détaillée du corps de déformation du capteur de la figure 1.
- La figure 3 représente schématique la déformation du corps de déformation de la figure 2.

### Description détaillée de l'invention

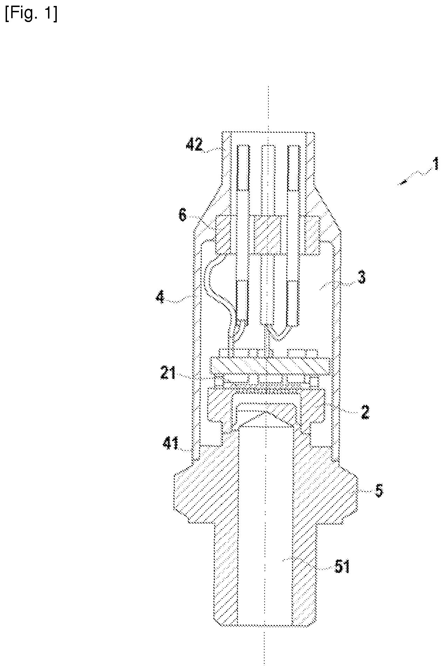

Comme visible sur la figure 1, un capteur 1 de pression comprend un corps de déformation 2 situé à l'intérieur d'une cavité 3 qui est formée à l'intérieur d'un capot 4. La cavité 3 débouche à une première extrémité 41 et à une deuxième extrémité 42 du capot 4.

Le capteur 1 de pression comprend également un corps de prise de pression 5 qui est fixé à la première extrémité 41 du capot 4. Le corps de pression 5 comprend un canal interne 51 qui débouche en regard du corps de déformation 2. Le canal interne 51 permet d'acheminer un fluide dont la pression est à mesurer par le capteur 1 vers le corps de déformation 2.

Le corps de déformation 2 peut être fixé au capot 4 selon une variante possible, ou bien ledit corps de déformation 2 peut être fixé au corps de prise de pression 5, comme cela est illustré sur la figure 1.

Ainsi, sous la pression du fluide acheminé par le canal interne 51 du corps de prise de pression 5, le corps de déformation 2 se déforme, la déformation dudit corps de déformation 2 étant fonction de la pression du fluide.

Une traversée étanche 6 est disposée à la deuxième extrémité 42 du capot 4 afin de permettre à la connectique de sortir du capot 4 de manière étanche, pour permettre de relier le capteur 1 à un dispositif de mesure de pression.

Afin de mesurer la déformation du corps de déformation 2, le capteur 1 comprend un élément sensible 21 qui est formé sur le corps de déformation.

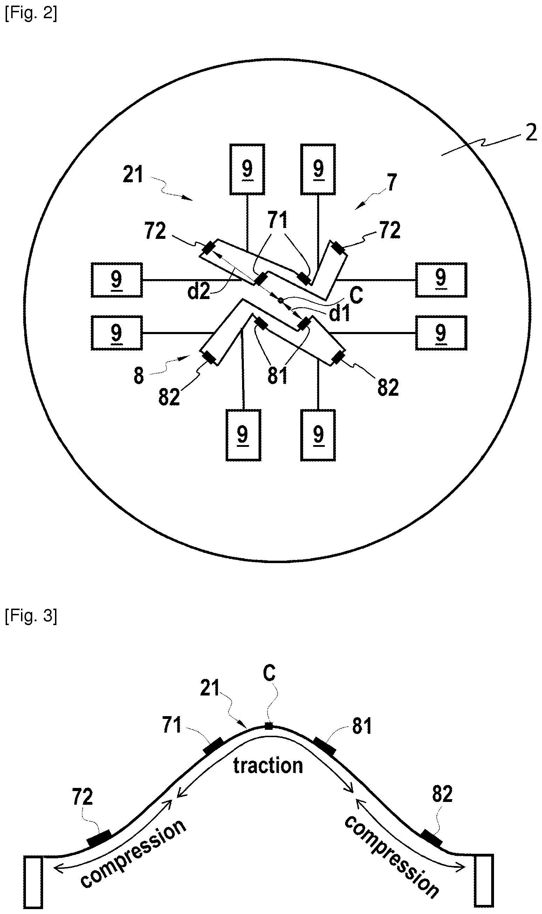

Dans l'exemple de réalisation illustré sur la figure 2, l'élément sensible 21 comprend un premier pont de Wheatstone 7 et un deuxième pont de Wheatstone 8. L'élément sensible 21 illustré sur la figure 2 comprend deux ponts de Wheatstone, toutefois l'élément sensible 21 peut comprend plus de deux ponts de Wheatstone.

Le premier pont de Wheatstone 7 comprend d'une part une première paire de résistances 71, les résistances 71 de la première paire étant situées à une première distance d1 du centre C du corps de déformation 2, et d'autre part une deuxième paire de résistances 72, les résistances 72 de la deuxième paire étant situées à une deuxième distance d2 du centre C du corps de déformation 2. Les résistances 71 et 72 du premier pont de Wheatstone comprennent toutes une même valeur de résistance.

Le deuxième pont de Wheatstone 8 comprend d'une part une première paire de résistances 81, les résistances 81 de la première paire étant situées à la première distance d1 du centre C du corps de déformation 2, et d'autre part une deuxième paire de résistances 82, les résistances 82 de la deuxième paire étant situées à la deuxième distance d2 du centre C du corps de déformation 2.

La deuxième distance d2 est supérieure à la première distance d1. Les résistances 71, 81 de la première paire sont donc situées plus près du centre C du corps de déformation 2 que les résistances 72, 82 de la deuxième paire.

L'élément sensible 21 comprend également une pluralité de bornes 9 qui sont déposées autour des ponts de Wheatstone 7, 8. Les bornes 9 permettent d'alimenter électriquement les ponts de Wheatstone 7, 8 et de réaliser les mesures de valeur de résistance des différentes résistances 71, 72, 81, 82.

Le fait que l'élément sensible 21 du capteur 1 comprenne une pluralité de ponts de Wheatstone 7, 8 permet de créer une redondance tout en utilisant un unique capteur 1.

En outre, le fait que les ponts de Wheatstone 7, 8 comprennent chacun une pluralité de paires de résistances 71, 72, 81, 82 réparties d'une part à la première distance d1 et d'autre part à la deuxième distance d2 permet d'améliorer la précision de la mesure de la déformation du corps de déformation.

De manière préférentielle, d'une part la première distance d1 est adaptée pour que la première paire de résistances du premier pont de Wheatstone 7 et du deuxième pont de Wheatstone 8 soit soumise à une traction lorsque le corps de déformation 2 est déformé, et d'autre part la deuxième distance d2 est adaptée pour que la deuxième paire de résistances du premier pont de Wheatstone 7 et du deuxième pont de Wheatstone 8 soit soumise à une compression lorsque le corps de déformation 2 est déformé.

Ainsi, comme cela est illustré sur la figure 3, la première paire de résistances 71 du premier pont de Wheatstone 7 et la première paire de résistance 81 du deuxième pont de Wheatstone 8 sont situées dans une zone du corps de déformation 2 soumise à une traction lorsque ledit corps de déformation 2 est déformé par le fluide dont le capteur 1 mesure la pression. En outre, comme cela est illustré sur la figure 3, la deuxième paire de résistances 72 et la deuxième paire de résistances 82 du deuxième pont de Wheatstone 8 sont situées dans une zone du corps de déformation 2 soumise à une traction lorsque ledit corps de déformation 2 est déformé par le fluide dont le capteur 1 mesure la pression.

Les résistances 71, 72, 81, 82 et les pistes de connexion des ponts de Wheatstone 7, 8 peuvent être réalisées par dépôt en couche mince de différents matériaux conducteurs électriquement.

Selon une variante possible permettant d'améliorer le ratio signal sur bruit du capteur 1, les résistances 71, 72 du premier pont de Wheatstone 7 sont dans un premier matériau, et les résistances 81, 82 du deuxième pont de Wheatstone 8 sont dans un deuxième matériau, le premier matériau étant différent du deuxième matériau. Le fait que le premier matériau et le deuxième matériau sont différents permet d'augmenter le ratio signal sur bruit car les résistances 71, 72, 81, 82 des deux ponts de Wheatstone 7, 8 vont avoir une réponse piézorésistive différente.

Selon une autre variante possible permettant de simplifier la fabrication du capteur 1, le premier matériau dans lequel les résistances 71, 72 du premier pont de Wheatstone 7 sont fabriquées est identique au deuxième matériau dans lequel les résistances 81, 82 du deuxième pont de Wheatstone 8.

Selon une solution possible, afin que le capteur 1 comprenne une double étendue de mesure, les résistances 71, 72 du premier pont de Wheatstone 7 possèdent une valeur de résistance qui est différente de la valeur de résistance des résistances 81, 82 du deuxième pont de Wheatstone 8. Il est ainsi possible d'utiliser un capteur 1 dont le premier pont de Wheatstone 7 est configuré pour fonctionner pour une première plage de pression, et dont le deuxième pont de Wheatstone 8 est configuré pour fonctionner pour une deuxième plage de pression qui est différente de la première plage de pression.

Selon une autre solution possible permettant d'assurer une meilleure redondance, les résistances 71, 72 du premier pont de Wheatstone 7 possèdent une même valeur de résistance que les résistances 81, 82 du deuxième pont de Wheatstone 8.

Lorsque les résistances 71, 72 du premier pont de Wheatstone 7 et les résistances 81, 82 du deuxième pont de Wheatstone 8 sont dans des matériaux différents, les résistances 71, 72 du premier pont de Wheatstone 7 possèdent préférentiellement 8 une valeur de résistance différente de celle des résistances 81, 82 du deuxième pont de Wheatstone 8, simplifiant ainsi la fabrication de l'élément sensible 21.

Cependant, selon une variante possible, les résistances 71, 72 du premier pont de Wheatstone 7 et les résistances 81, 82 du deuxième pont de Wheatstone 8 peuvent posséder une valeur de résistance identique en étant dans des matériaux différents.

Afin d'améliorer la précision du capteur 1, ledit capteur 1 peut comprendre un circuit de compensation qui permet de compenser les variations en température des résistances de l'élément sensible 21. La valeur de résistance varie en effet avec la température des résistances. Le circuit de compensation est configuré pour d'une part compenser la variation en température des résistances 71, 72 du premier pont de Wheatstone 7, et d'autre part compenser la variation en température des résistances 81, 82 du deuxième pont de Wheatstone 8.

Le capteur 1 de pression peut typiquement être utilisé pour mesurer la pression d'un fluide stocké dans un réservoir. Plus particulièrement, le réservoir est un réservoir de gaz liquéfié pour moteur cryogénique d'une fusée. Un moteur cryogénique est un moteur à propulsion chimique dans lequel le carburant et le comburant sont stockés à l'état liquide.

Ainsi, le réservoir dans lequel le capteur 1 mesure la pression du fluide stocké peut être un réservoir de dioxygène liquide, un réservoir de méthane liquide, ou bien encore un réservoir de dihydrogène liquide.

Le capteur 1 de pression est avantageux pour mesurer la pression d'un réservoir de gaz liquéfié car le capteur 1 est un capteur cryogénique, c'est-à-dire capable de fonctionner à des températures très basses (-180°C pour le dioxygène liquide, -250°C pour le dihydrogène liquide, -160°C pour le méthane liquide).

## Revendications

1. Capteur (1) de pression comprenant un corps de déformation (2), **caractérisé en ce qu'**au moins un premier pont de Wheatstone (7) et un deuxième pont de Wheatstone (8) sont formés sur ledit corps de déformation (2), le premier pont de Wheatstone (7) et le deuxième pont de Wheatstone (8) comprenant chacun d'une part une première paire de résistances (71, 81) situées à une première distance (d1) d'un centre (C) du corps de déformation (2), et d'autre part une deuxième paire de résistances (72, 82) situées à une deuxième distance (d2) dudit centre (C) dudit corps de déformation (2), la deuxième distance (d2) étant supérieure à la première distance (d1), **caractérisé en ce que** le premier point de Wheatstone (7) comprend des résistances (71, 72) dans un premier matériau et le deuxième pont de Wheatstone (8) comprend des résistances (81, 82) dans un deuxième matériau, le premier matériau et le deuxième matériau étant différents.

2. Capteur (1) selon la revendication 1, dans lequel d'une part les premières paires de résistances (71, 81) du premier pont de Wheatstone (7) et du deuxième pont de Wheatstone (8) sont situées dans une zone du corps de déformation (2) soumise à une traction lorsque ledit corps de déformation (2) est déformé, et d'autre part les deuxièmes paires de résistances (72, 82) du premier pont de Wheatstone (7) et du deuxième pont de Wheatstone (8) sont situées dans une zone du corps de déformation (2) soumise à une compression lorsque ledit corps de déformation (2) est déformé.

3. Capteur (1) selon l'une quelconque des revendications 1 ou 2, dans lequel les résistances (71, 72) du premier pont de Wheatstone (7) et les résistances (81, 82) du deuxième pont de Wheatstone (8) possèdent une valeur de résistance identique.

4. Capteur (1) selon l'une quelconque des revendications 1 ou 2, dans lequel les résistances (71, 72) du premier pont de Wheatstone (7) et les résistances (81, 82) du deuxième pont de Wheatstone (8) possèdent une valeur de résistance différente.

5. Capteur (1) selon l'une quelconque des revendications 1 à 4, dans lequel le capteur (1) comprend un circuit de compensation qui est configuré pour d'une part compenser une variation en température de des résistances (71, 72) du premier pont de Wheatstone (7), et d'autre part compenser une variation en température des résistances (81, 82) du deuxième pont de Wheatstone (8).

6. Moteur fusée comprenant un capteur (1) de pression selon l'une quelconque des revendications 1 à 5.

7. Moteur fusée à propulsion liquide selon la revendication 6, dans lequel le capteur (1) est situé dans une paroi d'un circuit de fluide.

## Patentansprüche

1. Drucksensor (1), der einen Verformungskörper (2) umfasst, **dadurch gekennzeichnet, dass** mindestens eine erste Wheatstone-Brücke (7) und eine zweite Wheatstone-Brücke (8) auf dem Verformungskörper (2) gebildet sind, wobei die erste Wheatstone-Brücke (7) und die zweite Wheatstone-Brücke (8) jeweils einerseits ein erstes Paar Widerstände (71, 81), die sich in einem ersten Abstand (d1) von einer Mitte (C) des Verformungskörpers (2) befinden, und andererseits ein zweites Paar Widerstände (72, 82) umfassen, die sich in einem zweiten Abstand (d2) von der Mitte (C) des Verformungskörpers (2) befinden, wobei der zweite Abstand (d2) größer ist als der erste Abstand (d1), **dadurch gekennzeichnet, dass** die erste Wheatstone-Brücke (7) Widerstände (71, 72) aus einem ersten Material umfasst und die zweite Wheatstone-Brücke (8) Widerstände (81, 82) aus einem zweiten Material umfasst, wobei das erste Material und das zweite Material sich voneinander unterscheiden.

2. Sensor (1) nach Anspruch 1, wobei einerseits die ersten Paare von Widerständen (71, 81) der ersten Wheatstone-Brücke (7) und der zweiten Wheatstone-Brücke (8) sich in einer Zone des Verformungskörpers (2) befinden, die einer Zugkraft unterliegt, wenn der Verformungskörper (2) verformt wird, und andererseits die zweiten Paare von Widerständen (72, 82) der ersten Wheatstone-Brücke (7) und der zweiten Wheatstone-Brücke (8) sich in einer Zone des Verformungskörpers (2) befinden, die einer Druckkraft unterliegt, wenn der Verformungskörper verformt wird.

3. Sensor (1) nach einem der Ansprüche 1 oder 2, wobei die Widerstände (71, 72) der ersten Wheatstone-Brücke (7) und die Widerstände (81, 82) der zweiten Wheatstone-Brücke (8) einen identischen Widerstandswert besitzen.

4. Sensor (1) nach einem der Ansprüche 1 oder 2, wobei die Widerstände (71, 72) der ersten Wheatstone-Brücke (7) und die Widerstände (81, 82) der zweiten Wheatstone-Brücke (8) einen unterschiedlichen Widerstandswert besitzen.

5. Sensor (1) nach einem der Ansprüche 1 bis 4, wobei der Sensor (1) eine Kompensationsschaltung umfasst, die dazu ausgestaltet ist, einerseits eine Temperaturschwankung der Widerstände (71, 72) der ersten Wheatstone-Brücke (7) zu kompensieren und andererseits eine Temperaturschwankung der Widerstände (81, 82) der zweiten Wheatstone-Brücke (8) zu kompensieren.

6. Raketenantrieb, der einen Drucksensor (1) nach einem der Ansprüche 1 bis 5 umfasst.

7. Flüssigkeitsraketenantrieb nach Anspruch 6, wobei der Sensor (1) sich in einer Wand eines Fluidkreislaufs befindet.

## Claims

1. A pressure sensor (1) comprising a deformation body (2), **characterized in that** at least a first Wheatstone bridge (7) and a second Wheatstone bridge (8) are formed on said deformation body (2), the first Wheatstone bridge (7) and the second Wheatstone bridge (8) each comprising, on the one hand, a first pair of resistors (71, 81) located at a first distance (d1) from a center (C) of the deformation body (2) and, on the other hand, a second pair of resistors (72, 82) located at a second distance (d2) from said center (C) of said deformation body (2), the second distance (d2) being greater than the first distance (d1),
**characterized in that** the first Wheatstone bridge (7) comprises resistors (71, 72) in a first material and the second Wheatstone bridge (8) comprises resistors (81, 82) in a second material, the first material and the second material being different from each other.

2. The sensor (1) according to claim 1, wherein on the one hand the first pairs of resistors (71, 81) of the first Wheatstone bridge (7) and of the second Wheatstone bridge (8) are located in one area of the deformation body (2) subjected to a traction when said deformation body (2) is deformed and, on the other hand, the second pairs of resistors (72, 82) of the first Wheatstone bridge (7) and of the second Wheatstone bridge (8) are located in one area of the deformation body (2) subjected to a compression when said deformation body (2) is deformed.

3. The sensor (1) according to any one of claims 1 or 2, wherein the resistors (71, 72) of the first Wheatstone bridge (7) and the resistors (81, 82) of the second Wheatstone bridge (8) have the same resistance value.

4. The sensor (1) according to any one of claims 1 or 2, wherein the resistors (71, 72) of the first Wheatstone bridge (7) and the resistors (81, 82) of the second Wheatstone bridge (8) have a different resistance value.

5. The sensor (1) according to any one of claims 1 to 4, wherein the sensor (1) comprises a compensation circuit which is configured on the one hand to compensate for a temperature variation of the resistors (71, 72) of the first Wheatstone bridge (7) and on the other hand to compensate for a temperature variation of the resistors (81, 82) of the second Wheatstone bridge (8).

6. A rocket engine comprising a pressure sensor (1) according to any one of claims 1 to 5.

7. A liquid-propellant rocket engine according to claim 6, wherein the sensor (1) is located in a wall of a fluid circuit.
